# EUROPÄISCHE PATENTSCHRIFT

(11) **EP 0 928 876 B1**
(45) Veröffentlichungstag und Bekanntmachung des Hinweises auf die Patenterteilung: **11.07.2001**
(21) Anmeldenummer: 99104961.0
(22) Anmeldetag: 11.03.1997
(51) Int. Cl.: E21B 3/02, E21B 17/05, F16J 15/00

(54) **Vorrichtung zur Herstellung eines Erdlochs**
Device for drilling a bore hole in the ground
Dispositif de forage d'un trou en terre

(30) Priorität: 13.03.1996 DE 19609899
(43) Veröffentlichungstag der Anmeldung: 14.07.1999
(62) Teilanmeldung aus: 97918014.8
(73) Patentinhaber: Wirth Maschinen- und Bohrgeräte-Fabrik GmbH, 41812 Erkelenz (DE)
(72) Erfinder: Tibussek, Fritz, 41063 Mönchenlgladbach (DE); Heinrichs, Peter, 41812 Erkelenz (DE)
(74) Vertreter: Kluin, Jörg-Eden, Dr. Dipl.-Phys.

(56) Entgegenhaltungen:
- EP-A- 0 302 632
- EP-A- 0 627 543
- WO-A-90/12229
- DE-A- 3 817 660
- US-A- 2 921 805

## Beschreibung

Die Erfindung betrifft eine Vorrichtung zur Herstellung eines Erdlochs nach dem Oberbegriff des Anspruchs 1.

Derartige Vorrichtungen bzw. Maschinen sind aus dem Stand der Technik bekannt (siehe EP-A-302 632). Die Werkzeughämmer sind hierbei zu mehreren direkt mit dem Werkzeugkopf verbunden, so daß die Schlagenergie über das Antriebsmedium auf die in das Bohrloch abgetauchten Hämmer und von diesen direkt auf die Bohrlochsohle übertragen wird, so daß das Verbindungsgestänge davon weitgehend unbeeinflußt bleibt. Der Werkzeugkopf ist über das Verbindungsgestänge mit einer außerhalb des Bohrlochs angeordneten Antriebsvorrichtung wie einem Drehantrieb verbunden, so daß die an dem Werkzeugkopf angeordneten Hämmer an immer neuen Stellen der Bohrlochsohle arbeiten. In erster Linie wird mit den in Rede stehenden Vorrichtungen in massivem Gestein gearbeitet.

Für die Praxis ist diese Art des Bohrens von zunehmender Bedeutung, da einerseits die Qualität der Bohrlöcher besser ist und die Richtung der Bohrlöcher nahezu exakt eingehalten werden kann, andererseits aufgrund der schallschluckenden Einsatzweise im Bohrloch ohne wesentliche Außenwirkung Umweltkriterien wie Lärmbelästigung deutlich besser erfüllt werden.

Der Abtransport des an der Bohrlochsohle losgehämmerten bzw. abgeschürften Gesteinsmaterials aus dem Bohrloch heraus kann bei derartigen Anlagen innerhalb des hohlen Verbindungsgestänges nach dem sogenannten Lufthebeverfahren (reverse circulation) erfolgen, bei dem eine Flüssigkeitssäule im Bohrloch steht und Luft als Spülflüssigkeit in das Bohrgestänge oberhalb des Werkzeugkopfes eingeblasen wird, so daß durch die im Verbindungsgestänge hochsteigende Luft eine Druckdifferenz in der Flüssigkeitssäule im Verbindungsgestänge zwischen Bohrloch und Oberfläche entsteht, die eine Strömungsgeschwindigkeit im Verbindungsgestänge induziert, mit der das Gesteinsmaterial durch das Verbindungsgestänge hindurch ausgetrieben wird.

Beim hämmernden Herstellen eines Erdlochs muß der für das Abtransportieren des gelösten Materials zur Verfügung stehende Innendurchmesser des Verbindungsgestänges eine gewisse Mindestgröße aufweisen, die an die hochzufördernde Gesamtmenge angepaßt ist. Auch weisen die losgeschlagenen Gesteinsbrocken im Vergleich zum reinen Drehbohren größere Dimensionen auf.

Das fluide Antriebsmedium für die am unteren Ende des Verbindungsgestänges sitzenden Bohrhämmer wird von dem entsprechenden Drehanschlußkopf am oberen Ende des Verbindungsgestänges über eine in oder an dem Verbindungsgestänge ausgebildete Zuführung den Bohrhämmern zugeführt.

Bei den wie erwähnt notwendig relativ großen Durchmessern des Verbindungsgestänges ergeben sich Probleme bei den Dichtungen des Drehanschlußkopfes.

Hydraulisch oder pneumatisch angetriebene Hämmer werden bei Drücken von etwa 50 bis 150 bar betrieben. Es zeigte sich, daß bei diesen hohen Drücken und dem große Durchmesser erfordernden Lufthebeverfahren bei den bisher an der kritischen Stelle des Übergangs zwischen dem feststehenden Drehanschlußkopf und dem sich drehenden Verbindungsgestänge eingesetzten Einfachdichtungen wirtschaftliche Standzeiten nicht zu erzielen waren.

Aufgabe der Erfindung ist es, eine gattungsgemäße Vorrichtung so zu verbessern, daß bei größeren Außendurchmessern des hohlen Verbindungsgestänges und den erforderlichen höheren Drücken die Vorrichtung mit längeren reparaturfreien Zeiträumen betrieben werden kann.

Diese Aufgabe wird durch die im Anspruch 1 angegebene Erfindung gelöst.

Bei der Vorrichtung gemäß Anspruch 1 ist das Verbindungsgestänge ringförmig von einem in der Regel stehend angeordneten Gehäuse umgeben. Das fluide Antriebsmedium wie Luft, Wasser oder ein Hydrauliköl kann von einer äußeren Zuleitung über einen in die Übergangskammer führenden feststehenden Anschluß eingespeist werden. Die Übergangskammer umgibt dabei ringförmig das Verbindungsgestänge, so daß das Antriebsmedium unabhängig von der Drehstellung des Verbindungsgestänges mit der Zuleitung für das Arbeitsmedium in Kontakt steht. Zu beiden Seiten der Übergangskammer sind jeweils mehrere in Achsrichtung gestaffelte stufenweise hydraulisch entlastete Ringdichtungen vorgesehen.

Im Betrieb der Vorrichtung wird die Entlastung der Ringdichtungen so gewählt, daß die an jeder Ringdichtung wirkende Druckdifferenz einen Maximalwert, der von den Eigenschaften der verwendeten Dichtung abhängig ist, nicht überschreitet. Dazu wird jeweils auf der in Achsrichtung von der Übergangskammer abgewandten Seite einer jeden Ringdichtung ein Druck angelegt, der niedriger als der angelegte Druck auf der der Übergangskammer zugewandten Seite ist. Die Druckdifferenz, unter deren Wirkung die Dichtung an den Außenumfang des Verbindungsgestänges angedrückt wird entspricht einem von der Ringdichtung dauerhaft ertragbaren Wert. Bei der in Achsrichtung außen, d.h. in der von der Übergangskammer hinwegweisenden Richtung nachfolgenden Ringdichtung liegen der vorangehende Entlastungsdruck als Anpreßdruck und ein um einen entsprechenden Wert niedrigerer Entlastungsdruck an, der wiederum der Belastungsdruck für die folgende Dichtung ist. So erniedrigen sich die Anpreßdrücke, stufenweise, wobei die einzelne Ringdichtung jeweils nur einen noch zulässigen Druck von beispielsweise 10 bis 25 bar auszuhalten hat. Durch die Anzahl der verwendeten Ringdichtungen und die gewählten Entlastungsdrücke kann eine Anpassung an den Arbeitsdruck des fluiden Arbeitsmediums erfolgen.

Die den Ringdichtungen zur Entlastung zugeführten Hydraulikdrücke werden von Druckerzeugern bereitgestellt, und wirken in Ringkammern, die jeweils zwischen zwei Ringdichtungen an der der Übergangskammer abgewandten Seite angeordnet sind.

Zur Erzeugung der abgestuften Entlastungsdrucke werden als Druckerzeuger Druckuntersetzer beispielsweise in Form von Druckzylindern mit einseitiger Druckflächenreduzierung durch eine Kolbenstange eingesetzt, wobei der die Kolbenstange aufweisenden Seite des Zylinders das Antriebsmedium und damit dessen Druck zuführbar ist, so daß über den Kolbenstangendurchmesser und die verbleibende verringerte Wirkfläche auf der anderen Seite des Kolbens sich ein relativ zum Druck des Arbeitsmediums um einen festen Prozentsatz verringerter Druck zwangsläufig einstellt. Bei der derart zwangsweise über die Geometrie der Kolbenstange sich ergebenden Druckabstufung ist von Vorteil, daß eine Schwankung des Druckes des Arbeitsmediums automatisch auf die einzelnen, an den einzelnen Ringdichtungen wirkenden Druckdifferenzen aufgeteilt wird, ohne daß ein Nachstellen der einzelnen Entlastungsdrücke notwendig ist. Diese Art der Bereitstellung der Entlastungsdrücke ist also von der Funktion von Pumpen und Steuerventilen unabhängig. Es werden so viele Druckuntersetzer eingesetzt, wie Stufen des Entlastungsdrucks notwendig sind, wobei die Unterschiede in den untersetzten Drücken durch unterschiedliche Kolbenstangendurchmesser erzeugt werden.

Die Druckerzeuger können zweckmäßig an dem feststehenden Gehäuse des Drehanschlußkopfs angeordnet sein, was baulich einfach ist und kurze Verbindungsleitungen ermöglicht.

Wenn die stufenweise Entlastung der Ringdichtungen nach beiden Seiten der Übergangskammer symmetrisch erfolgt, können immer zwei Ringkammern an einen Druckuntersetzer angeschlossen werden.

Bei einer ersten Ausführungsform dieser erfindungsgemäßen Vorrichtung dient als Drehantriebseinrichtung ein mit dem oberen Ende des segmentierten Verbindungsgestänges verbundener, sich höhenvariabel an der Stützvorrichtung abstützender Kraftdrehkopf. Der Vortrieb wird bei dieser Ausführungsform durch Absenken des Kraftdrehkopfes hervorgerufen. Hat der Kraftdrehkopf seine untere Position erreicht, d.h. die Bohrung um eine Segmentlänge niedergebracht, so muß er von dem oberen Ende des Verbindungsgestänges gelöst und anschließend in seine obere Position gefahren werden. In dieser Position besteht zwischen dem der Befestigung des angetriebenen Teils des Kraftdrehkopfes dienenden Flansch und dem oberen Ende des Verbindungsgestänges eine freie Länge, die mindestens derjenigen eines Segments des Verbindungsgestänges entspricht. Es kann nun ein weiteres Segment des Verbindungsgestänges eingesetzt werden. Die Stützvorrichtung muß daher eine Höhe aufweisen, die mindestens der Länge eines Segmentes entspricht.

Bei einer weiteren Ausführungsform der erfindungsgemäßen Vorrichtung ist die Drehantriebseinrichtung als wahlweise mit der Mantelfläche des Verbindungsgestänges in Wirkverbindung - beispielsweise durch einen Klemmgriffbringbarer, an sich konstruktiv von Verrohrungsvorrichtungen bekannter Drehantrieb ausgebildet.

Wenn dieser höhenverstellbar an der Stützvorrichtung angeordnet ist, können auch Vortriebskräfte über den Drehantrieb in das Verbindungsgestänge eingeleitet werden. Der Vortrieb kann insgesamt durch periodisches "Nachsetzen" des Drehantriebes erfolgen, indem dieser im gelösten Zustand um eine gewisse Strecke nach oben verlagert, anschließend wiederum an der Mantelfläche des Verbindungsgestänges festgelegt und erneut abgesenkt wird. Da der Drehantrieb an nahezu jeder beliebigen Stelle bezogen auf die Länge des Verbindungsgestänges festgelegt werden kann, ist es nicht mehr erforderlich, daß der Hub, um den der Drehantrieb in Richtung der Längsachse des Gestänges verlagert werden kann, mindestens der Länge eines Segments desselben entspricht, so daß die Antriebsvorrichtung im Vergleich zu bisher bekannten erheblich niedriger bauen kann.

Der Höhenverstellung dient vorzugsweise ein längenverstellbarer Krafterzeuger, der als hydraulisch betätigbare Kolben-/Zylindereinheit ausgebildet ist.

Weitere Ausgestaltungen der Erfindung werden aus der nachfolgenden Beschreibung unter Bezugnahme auf die Zeichnungen ersichtlich.

In der Zeichnung zeigen:
Fig. 1 perspektivisch einen außerhalb des Erdlochs angeordneten Antriebsaufbau einer ersten erfindungsgemäßen Ausführungsform;
Fig. 1A einen Drehantrieb, der bei der Ausführungsform der Antriebseinheit gemäß Fig. 1 alternativ zu dem hierin dargestellten Drehantrieb Verwendung finden kann;
Fig. 2 schematisch die Wirkungsweise des Lufthebesystems bei der erfindungsgemäßen Vorrichtung;
Fig. 3 den Drehanschlußkopf für das fluide Arbeitsmedium in Seitenansicht, teilweise geschnitten;
Fig. 4 einen durch die Längsachse gehenden Längsschnitt durch den oberen Teil in Fig. 3 dargestellten Drehanschlußkopfes in vergrößertem Maßstab;
Fig. 4A eine vergrößerte Wiedergabe des in Fig. 4 mit IVa bezeichneten, strichpunktiert umrandeten Bereichs;
Fig. 5 schematisch Schnittansichten dreier Druckuntersetzer mit unterschiedlichen Kolbenstangendurchmessern;
Fig. 6 eine Seitenansicht eines Werkzeugkopfes mit mehreren Bohrhämmern sowie
Fig. 7 eine Ansicht gemäß Fig. 6 von unten.

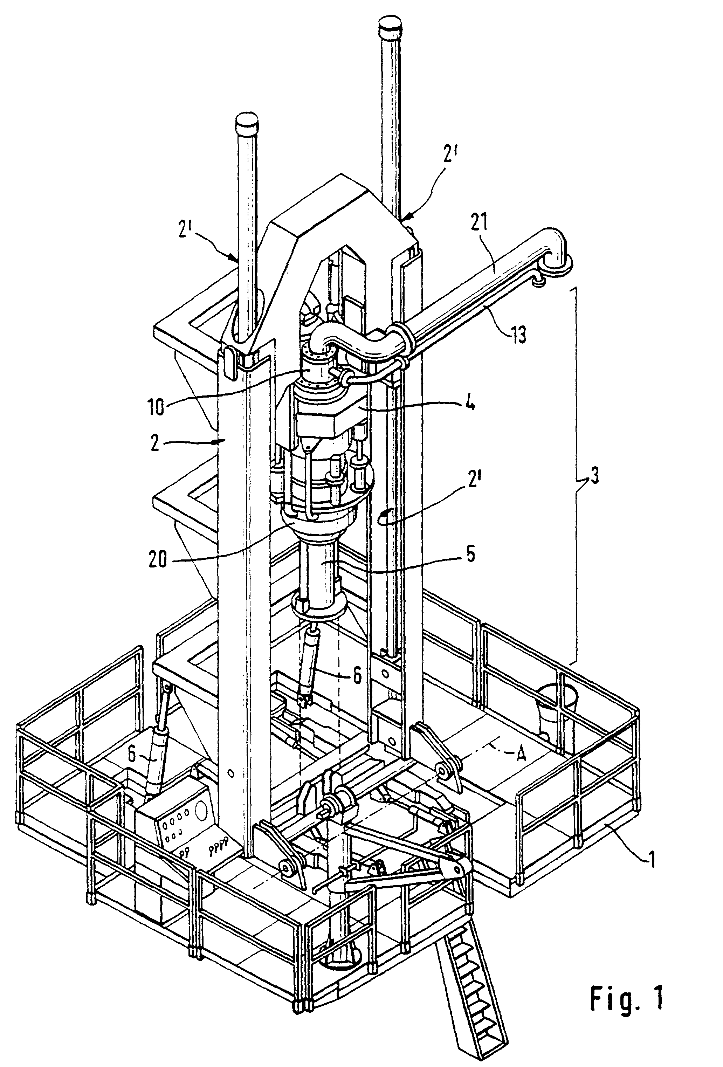

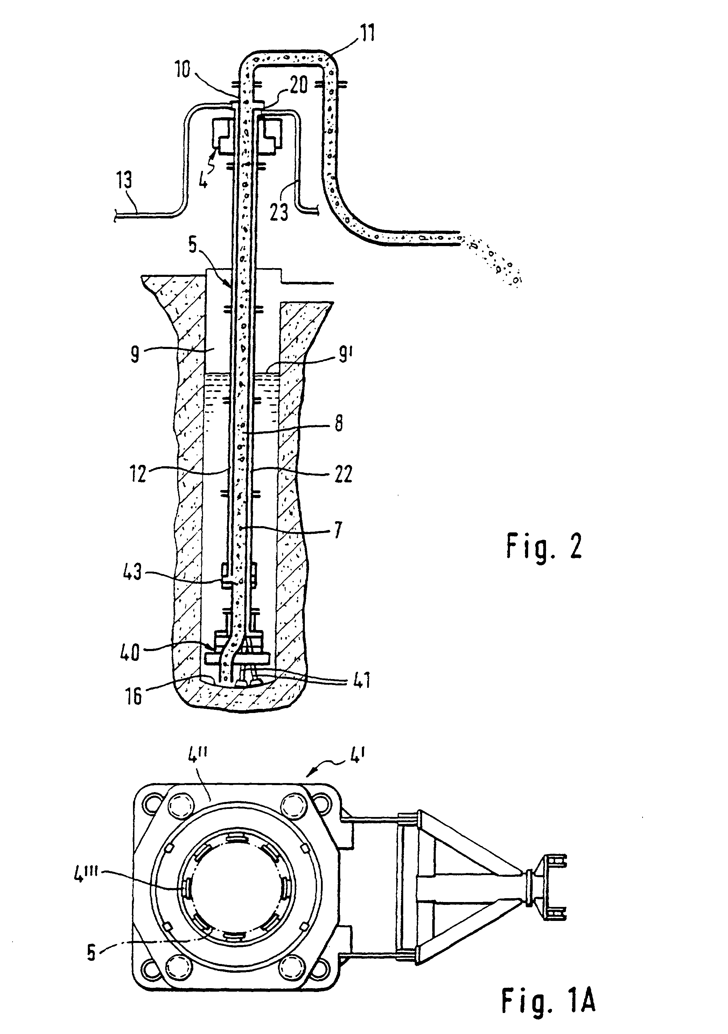

Fig. 1 zeigt den außerhalb eines herzustellenden Erdlochs angeordneten Teil einer erfindungsgemäßen Vorrichtung der ersten Ausführungsform. Der insgesamt mit 3 bezeichnete Antriebsaufbau der Vorrichtung ist an einer Stützvorrichtung 2 befestigt, die auf einer insgesamt mit 1 bezeichneten Arbeitsplattform abgestützt ist. An einem miteinander verbindbare Segmente aufweisenden Verbindungsgestänge 5, von dem nur der obere Teil gezeigt ist und das sich (nur gestrichelt angedeutet) durch die Arbeitsplattform 1 hindurch in das herzustellende Erdloch hinein und bis zum Werkzeugkopf erstreckt, greift ein schematisch gezeigter Drehantriebskopf 4 an. Der Antrieb des Verbindungsgestänges 5 mit dem Drehantriebskopf 4 kann auf herkömmliche, aus dem Stand der Technik bekannte Art und Weise erfolgen, beispielsweise über einen Hydraulikmotor.

Alternativ ist es jedoch ebenfalls möglich, anstatt des am oberen Ende des Vebindungsgestänges 5 angeordneten Drehantriebskopfes 4 einen in Fig. 1A dargestellten Drehantrieb 4' zu verwenden, wie er konstruktiv an sich von Verrohrungsvorrichtungen bekannt ist.

Dieser Drehantrieb 4' umfaßt einen feststehenden, äußeren Teil 4", gegenüber dem ein ringförmiger Innenteil 4''', dessen Innendurchmesser an den Außendurchmesser des Verbindungsgestänges 5 angepaßt und mit diesem wahlweise zumindest in Antriebsrichtung in Wirkverbindung, d.h. kraftschlüssig oder formschlüssig verbindbar ist, rotationsantreibbar ist. Der Antrieb kann bspw. durch einen Hydraulikmotor erfolgen. Mit seinem feststehenden Teil 4" kann sich der Drehantrieb 4' mit an der Stützvorrichtung 2 vorgesehenen lägenvariablen Krafterzeugern 2', wie bspw. Spindeln oder Kolben/Zylindereinheiten, in Wirkverbindung befinden. Sind das Verbindungsgestänge 5 und der Innenteil 4''' des Drehantriebs 4' so ausgestaltet, daß auch in Längsrichtung des Verbindungsgestänges 5 eine kraftschlüssige Verbindung zwischen diesem und dem Innenteil 4''' erzielbar ist, so kann über den Drehantrieb 4' gleichsam eine Vortriebskraft in das Verbindungsgestänge eingeleitet werden. Es ist jedoch ebenfalls möglich, den Drehantrieb 4' fest an der Stützvorrichtung zu lagern und Innenteil 4''' und Verbindungsgestänge 5 so auszugestalten, daß das Verbindungsgestänge 5 in seiner Längsrichtung in dem Innenteil 4''' verlagerbar ist. In diesem Fall sind die Vortriebskräfte bspw. durch Angriff an dem noch zu beschreibenden ersten Drehanschlußkopf 10 in das Verbindungsgestänge einzuleiten.

Am oberen Ende des Verbindungsgestänges 5 ist ein mit 10 bezeichneter erster Drehanschlußkopf angeordnet, über den das am Grund des Erdlochs gelöste Material über das Auslaufrohr 21 nach außen abgeführt und Druckluft mittels einer ersten Zuleitung 13 in das Verbindungsgestänge eingeleitet wird. Unterhalb des ersten Drehanschlußkopfes 10 ist ein zweiter, insgesamt mit 20 bezeichneter Drehanschlußkopf angeordnet. Die Stützvorrichtung 2 ist um eine horizontale Achse A schwenkbar und mit Schwenkantrieben 6 verbunden, so daß sie geneigt werden kann und auch abweichend von der Vertikalen Erdlöcher gebohrt werden können.

Fig. 2 erläutert schematisch das Verfahren, mit dem mit den Hämmern 41 des Werkzeugkopfs 40 gelöste Erdbrocken von der Sohle 16 des teilweise mit Wasser beispielsweise bis zu einem Spiegel 9' gefüllten Erdlochs 9 nach außen befördert werden. Der Innenraum des Verbindungsgestänges 5 bildet ein Spülrohr 8, das normalerweise mit Wasser gefüllt ist, in das oberhalb des Werkzeugkopfes 40 durch eine Einlaßklappe 43 Luft eingeblasen wird, die außerhalb der Bohrvorrichtung mit einem nicht gezeigten Kompressor verdichtet wurde und über eine erste Zuleitung 13 und den ersten Drehanschlußkopf 10 mittels einer ersten Zuführung 12 entlang des Verbindungsgestänges 5 nach unten geführt wird. Die eingeblasene Luft bewirkt durch den Dichteunterschied zwischen der mit Luftblasen durchsetzten Flüssigkeit in dem Spülrohr 8 und der äußeren Flüssigkeit in dem Erdloch 9 eine Aufwärtsströmung innerhalb des Spülrohres 8, mit der die Erdbrocken 7 nach oben transportiert und über das Auslaufrohr 11 aus der Vorrichtung herausgespült werden. Über eine zweite Zuleitung 23 wird im einteilig mit dem ersten Anschlußkopf gezeigten zweiten Anschlußkopf 20 der zweiten Zuführung 22 das Arbeitsmedium zugeführt und über diese entlang des Verbindungsgestänges 5 zum Antrieb der Hämmer 41 des Werkzeugkopfs 40 nach unten geführt.

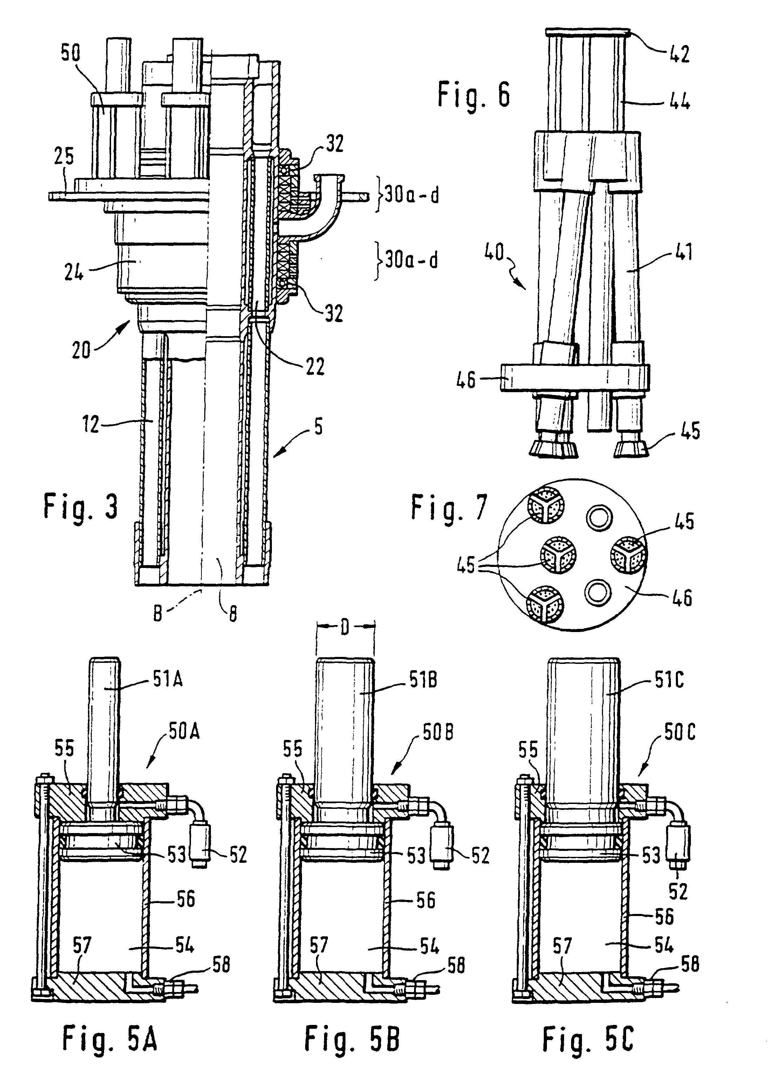

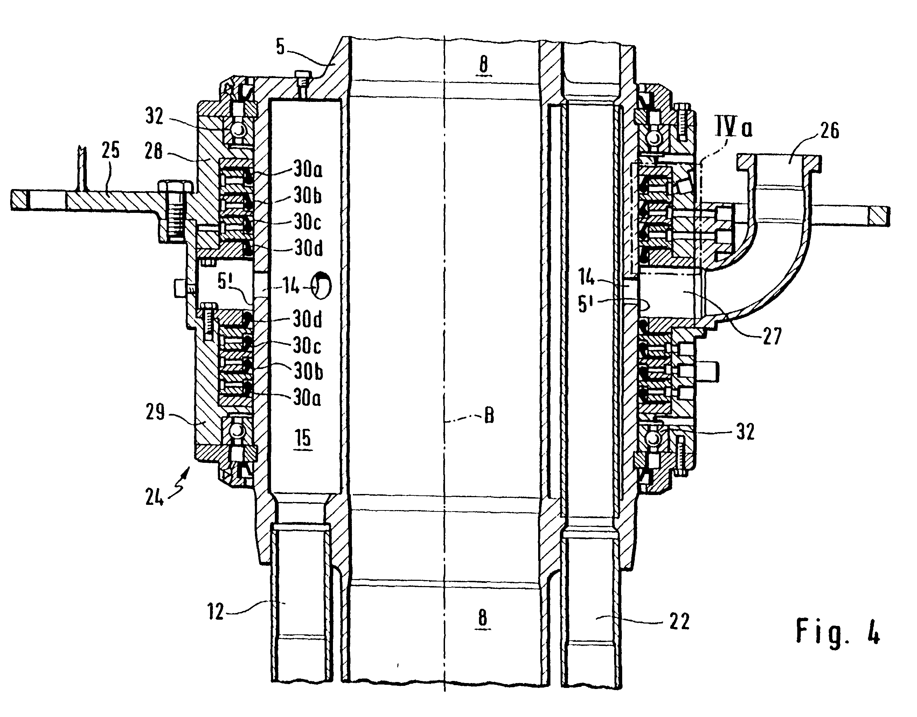

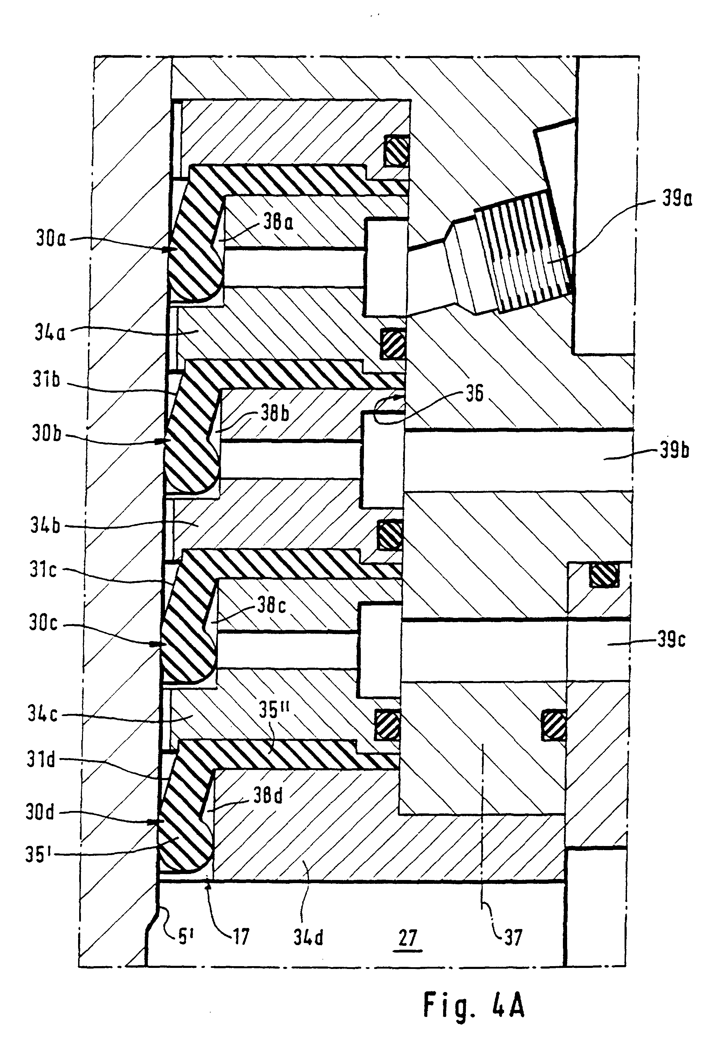

Fig. 3 zeigt eine Seitenansicht des zweiten Druckanschlußkopfes 20, wobei die linke Hälfte in Ansicht wiedergegeben ist und die rechte Hälfte einen durch die Achse B des Verbindungsgestänges 5 gehenden Schnitt durch den zweiten Drehanschlußkopf 20 zum Einleiten des Arbeitsmediums in die zweite Zuführung 22 zeigt. Innerhalb des Gehäuses 24 sind gestaffelte Dichtungsanordnungen, deren Wirkungsweise weiter unten beschrieben wird, und die Drehlager 32 angeordnet, auf denen das Gehäuse 24 auf dem Außenumfang des Verbindungsgestänges 5 drehbar abgestützt ist. Der zweite Drehanschlußkopf 20 kann über eine Drehmomentstütze 25 beispielsweise an der Abstützung 2 aus Fig. 1 befestigt werden. Diese Befestigung kann mittels Bolzen bewerkstelligt werden, die, falls der zweite Drehanschlußkopf 20 mitdrehen soll, nur entriegelt werden müssen. Soll die erfindungsgemäße Vorrichtung nämlich zwischenzeitlich nur für den reinen Drehbohrbetrieb eingesetzt werden, so dient das Lösen des das Verbindungsgestänge 5 umgebenden Gehäuses 24 des zweiten Drehanschlußkopfes 20 dazu, daß sich nach Lösen der Zuleitung für das fluide Antriebsmedium der zweite Drehanschlußkopf 20 mitdrehen kann, so daß die Ringdichtungen in diesem Zustand weder hydraulisch noch mechanisch belastet werden, wodurch die Standzeit verlängert wird.

An dem feststehenden Gehäuse 24 sind in dem gezeigten Beispiel drei Druckuntersetzer 50 befestigt, auf deren Funktion noch eingegangen wird.

Fig. 4 zeigt einen Schnitt durch den zweiten Drehanschluβkopf 20. Das Arbeitsmedium zum Antrieb der Hämmer - aus Umweltgründen und arbeitstechnischen Gründen wird bevorzugt Wasser verwendet - wird über einen feststehenden Anschluß 26, an den die zweite Zuleitung 23 (Fig. 2) angeschlossen wird, einer Übergangskammer 27 zugeführt, die das Verbindungsgestänge 5 ringförmig umgibt. Im Bereich des zweiten Drehanschlußkopfes 20 sollte die Oberfläche des Verbindungsgestänges 5 möglichst glatt und eben sein, so daß die gegen sie anliegenden Dichtungen nicht übermäßig auf Verschleiß beansprucht werden. Das Arbeitsmedium gelangt von der Übergangskammer 27 an der den Drehantriebskopf 20 durchsetzenden ersten Zuführung 12 für das Spülmedium vorbei durch über den Umfang verteilte Übertrittsöffnungen 14 hindurch in eine am oberen Ende des Verbindungsgestänges 5 ausgebildete Ringkammer 15 und von dort in die an der Außenseite des Verbindungsgestänges 5 entlangführende zweite Zuführung 22 in Gestalt eines Rohres. Auch die Zuführung 12 ist ein an der Außenseite des Verbindungsgestänges entlangführendes Rohr. Die beiden Zuführungen 12 bzw. 22 und das Spülrohr 8 sind also voneinander getrennt.

Das Gehäuse 24 weist einen oberen Flansch 28 und einen unteren Flansch 29 auf, zwischen denen die Übergangskammer 27 für das Arbeitsmedium in die zweite Zuführung 22 ausgebildet ist. Zu beiden Seiten der Übergangskammer 27 sind vier in Achsrichtung hintereinander gestaffelte, mit 30a, 30b, 30c und 30d bezeichnete Ringdichtungen angeordnet, die in dem Ausführungsbeispiel einen etwa L-förmigen Querschnitt aufweisen. Der eine Schenkel 35' einer jeden Ringdichtung (Fig. 4A) ist der den hohen Druck führenden Übergangskammer 27 entgegengerichtet und liegt mit der Außenseite am sich drehenden Außenumfang 5' des Verbindungsgestänges 5 an. Der jeweils andere Schenkel 35'' erstreckt sich in einer zur Achse des Verbindungsgestänges 5 senkrechten Ebene nach außen. Die Schenkel 35'' sind jeweils zwischen benachbarten Ringen 34a, 34b, 34c, 34d angeordnet, die in einer zylindrischen, der Außenumfangsfläche 5' benachbarten Kammer 36 des Gehäuses untergebracht und mit den dazwischen befindlichen Schenkeln 35'' zu einem Paket oder Block zusammengezogen sind, so daß alle Ringdichtungen fixiert sind.

Die Ringe 34a, 34b, 34c, 34d belassen an ihrer der Außenumfangsfläche 5' zugewandten inneren Umfangsfläche ringförmige Kammern 38a, 38b, 38c, 38d zur Aufnahme der Schenkel 35' der Ringdichtungen. Die ringförmigen Kammern 38a, 38b, 38c verfügen jeweils über einen eigenen Anschluß 39a, 39b, 39c, durch den von einem Druckuntersetzer 50 ein Druckmedium zuführbar ist. Das der jeweiligen ringförmigen Kammer 38a, 38b, 38c zugeführte Druckmedium gelangt über den Spalt zwischen dem Innenumfang des der Übergangskammer 27 zugewandten benachbarten Ringes und der Außenumfangsfläche 5' auf die Rückseite der nächsten, der Übergangskammer 27 näheren Ringdichtung. So gelangt z.B. der Druck in der ringförmigen Kammer 38c auf die Rückseite 31d des Schenkels 35' der Ringdichtung 30d und sucht diese von der Außenumfangsfläche 5' abzuheben. Bei 17 dringt die unter dem vollen Druck stehende Flüssigkeit in die ringförmige Kammer 38d ein und drückt den Schenkel 35' an die Außenumfangsfläche 5 an. Der in der ringförmigen Kammer 38c herrschende Druck wirkt der Andrückung entgegen. Für die tatsächliche Andrückung maßgebend ist die Druckdifferenz. Der Druck in dem Anschluß 39c wird so gewählt, daß die aktive Druckdifferenz einen bestimmten Grenzwert im Bereich von etwa 10 bis 25 bar nicht überschreitet, den die Ringdichtung 30d dauerhaft erträgt.

Der an dem Anschluß 39c zugeführte Druck drückt die Schenkel 35 der Ringdichtung 30c gegen die Außenumfangsfläche 5c an. Dieser Druck ist im allgemeinen zu hoch für die Ringdichtung 30c. Es wird daher an dem Anschluß 39b ein niedrigerer Druck zugeführt, der auf der Außenseite 31c des Schenkels 35' der Ringdichtung 30c entlastend wirkt, so daß letztere nicht gefährdet wird. Bei der nächsten Ringdichtung 30b erfolgt die Entlastung mit dem an dem Anschluß 39a zugeführten Druck, der die Ringdichtung 30a nicht mehr gefährdet. So wird der hohe Druck in der Übergangskammer 27 stufenweise abgebaut, so daß der Schenkel 35' jeder Ringdichtung nur mit einem für ihn ungefährlichen Teildruck angedrückt wird.

Wie bereits erwähnt, sind innerhalb des Gehäuses 24 Lager 32 angeordnet, auf denen sich das Verbindungsgestänge 5 innerhalb des fest angeordneten Gehäuses 24 drehen kann und die die Ringdichtungen radial in einer definierten Position gegenüber der die Dichtfläche bildenden Außenumfangsfläche 5' des Verbindungsgestänges halten. Von der sich drehenden Außenumfangsfläche 5' wird über die Ringdichtungen 30a, 30b, 30c, 30d ein Reibmoment auf das Gehäuse 24 übertragen, welches von der ebenfalls bereits erwähnten Drehmomentstütze 25 abgefangen wird.

Die gezeigte Ausführungsform ist beispielsweise für einen Druck eines Arbeitsmediums von etwa 70 bar ausgelegt. Die erste ringförmige Kammer 38d wird mit einem Druck beaufschlagt, der ca. 85 % des Druckes des Arbeitsmediums in der Übergangskammer 27 beträgt. Die zweite ringförmige Kammer 38c wird mit einem Druck beaufschlagt, der etwa 50 % und die dritte ringförmige Kammer 38b mit einem Druck, der etwa 15 % des Druckes des Arbeitsmediums beträgt. Daraus folgt, daß die Druckdifferenz an der ersten Ringdichtung 30d ca. 10 bar beträgt, an der zweiten und dritten Ringdichtung 30b und 30c je etwa 25 bar und an der vierten Dichtung 30d wieder etwa 10 bar. Bei diesen Drükken tritt trotz des großen Außenumfangs des Verbindungsgestänges 5 und einer an der Außenumfangsfläche 5' von dem Drehantriebskopf erzeugten Umfangsgeschwindigkeit von 5 bis 20 m kein zu hoher Verschleiß auf, der erfahrungsgemäß unvermeidbar ist, wenn nur eine Dichtung unter dem gesamten Druck in der Übergangskammer 27 steht.

Je nach den Drücken des Arbeitsmediums kann die Zahl der Ringdichtungen variiert werden, jedoch stets so, daß die Druckdifferenz an der einzelnen Ringdichtung einen Grenzwert von beispielsweise 25 bar nicht überschreitet.

Die Druckentlastung der einzelnen Ringdichtungen 30d, 30c, 30b wird in fester Abhängigkeit vom Druck des Arbeitsmediums über die Geometrie der einzelnen Druckuntersetzer 50 gesteuert. Fig. 5A, 5B und 5C zeigen den Aufbau dreier als hydraulische Zylinder 56 ausgebildeter Druckuntersetzer 50A, 50B und 50C. Die Zylinder 56 weisen jeweils eine Kopfplatte 55 und eine Bodenplatte 57 sowie eine die Kopfplatte 55 durchgreifende Kolbenstange 51A, 51B und 51C unterschiedlichen Durchmessers D, jedoch gleiche Kolben 53 und bis auf die Anschlüsse 58 in der Bodenplatte 57 geschlossene Zylinderkammern 54 gleichen Durchmessers auf. Das Arbeitsmedium wird dem Zylinder 56 jeweils über einen Anschluß 52 auf der Kolbenstangenseite, d.h. in der Kopfplatte 55 zugeführt. Die Zylinderkammer 54 ist mit einem von dem Arbeitsmedium verschiedenen hydraulischen Medium gefüllt und steht über den Anschluß 58 und hydraulische Leitungen mit einem Anschluß 39a, 39b, 39c einer Ringkammer 38a, 38b, 38c in Verbindung. Wenn bei allen verwendeten Druckuntersetzern 50 der Durchmesser der Zylinderkammern 54 und der Kolben 53 gleich ist, wird der mit den Druckuntersetzern 50 erzeugte Druck in den ringförmigen Kammern 38a, 38b, 38c nur durch den nach Abzug des Kolbenstangenquerschnittes verbleibenden Restquerschnitts der Zylinderkammer 54 bestimmt. Der Druckuntersetzer 50A mit dem kleinsten Kolbenstangenquerschnitt erzeugt also den höchsten Druck. Er ist an die ringförmige Kammer 38c angeschlossen.

Das hydraulische Medium in den Zylinderkammern 54 und den ringförmigen Kammern 38a, 38b, 38c ist bevorzugt ein Schmiermittel, z.B. ein Schmierfett, welches die Ringdichtungen 30a, 30b, 30c, 30d schmiert. Die Ringdichtungen bestehen aus einem elastomeren Material.

In den Fig. 6 und 7 ist ein Werkzeugkopf 40 gezeigt, der beispielsweise für den Antrieb mit Wasser als Arbeitsmedium vorgesehen ist. Die durch das Arbeitsmedium angetriebenen Hämmer 41 sind über Stützen 44 mit einer Montageplatte 42 verbunden, die am unteren Ende des Verbindungsgestänges 5 angebracht wird. Die an den Hämmern 41 angeordneten Werkzeuge 45 wirken nach unten auf die Sohle 10 des Erdlochs 9 (Fig. 2) und zertrümmern dort das Gestein. Die jeweilige Angriffsstelle bewegt sich durch die Drehung des Werkzeugkopfes 40 in Umfangsrichtung fort. Durch die Anbringung der Werkzeuge 45 auf unterschiedlichen Radien kann der gesamte Bohrlochquerschnitt überstrichen werden. Zahl und Anordnung der Werkzeuge 45 können an den Durchmesser des Erdlochs 9 und das abzutragende Material angepaßt werden. Die Hämmer 41 sind an ihren unteren Enden an einer kreisscheibenförmigen Führungsplatte 46 von einem dem Erdlochdurchmesser entsprechenden Durchmesser gehalten und geführt.

## Patentansprüche

1. Vorrichtung zur Herstellung eines Erdlochs (9)
mit einem oberhalb des herzustellenden Erdlochs (9) anzuordnenden Antriebsaufbau (3) mit einem feststehend angeordneten Drehantriebskopf (4),
mit einem hohlen Verbindungsgestänge (5), an dem der Drehantriebskopf (4) angreift und das durch den Drehantriebskopf hindurch in das Erdloch (9) absenkbar ist,
mit einem in dem Antriebsaufbau (3) feststehend angeordneten ersten Drehanschlußkopf (10), durch den dem oberen Ende des drehenden Verbindungsgestänges ein Spülmedium zuleitbar ist, das durch eine entlang des Verbindungsgestänges (5) sich erstrekende erste Zuführung (12) einer an dem Verbindungsgestänge (5) vorgesehenen Einlaßöffnung (43) zuführbar ist,
mit einem im Antriebsaufbau (3) angeordneten zweiten Drehanschlußkopf (2O), durch den dem oberen Ende des Verbindungsgestänges (5) ein fluides Antriebsmedium unter hohem Druck zuleitbar ist, das durch eine entlang des Verbindungsgestänges sich erstreckende zweite Zuführung (22) dem unteren Ende des Verbindungsgestänges (5) zuführbar ist, und der ein das Verbindungsgestänge (5) ringförmig umgebendes Gehäuse (24) mit einer mit der äußeren Zuleitung (23) für das fluide Antriebsmedium und mit dem oberen Ende der zweiten Zuführung (22) in Verbindung stehenden, in Achsrichtung nach beiden Seiten abgedichtete Übergangskammer (27) aufweist, wobei zu beiden Seiten der Übergangskammer (27) jeweils mehrere in Achsrichtung gestaffelte, hydraulisch entlastete Ringdichtungen (30a,30b,30c,30d) vorgesehen sind,
mit einem am unteren Ende des Verbindungsgestanges angeordneten, als Spülkopf ausgebildeten Werkzeugkopf (40), der mit dem Innern (8) des Verbindungsgestänges in Verbindung steht,
und mit mehreren an dem Werkzeugkopf angeordneten, nach unten arbeitenden, mit dem fluiden Antriebsmedium betriebenen Bohrhämmern (41),
**dadurch gekennzeichnet**,
daß jeweils an der der Übergangskammer (27) abgewandten Seite einer Ringdichtung (30a, 30b, 30c) eine ringförmige Kammer (38a,38b,38c) angeordnet ist, die einen Anschluß (39a,39b,39c) für die Zufuhr eines von einem Druckerzeuger bereitgestellten hydraulischen Druckmediums aufweist und mit einer die Ringdichtungen (30b,30c,30d) entlastenden Seite derselben in Verbindung steht,
daß die hydraulische Entlastung der Ringdichtungen (30a, 30b, 30c, 30d) stufenweise geschieht und
daß als Druckerzeuger von dem Antriebsmedium beaufschlagte Druckuntersetzer (50) vorgesehen sind.

2. Vorrichtung nach Anspruch 1, **dadurch gekennzeichnet**, daß die Druckuntersetzer (50) Zylinder (56) umfassen, bei denen der Druck des Antriebsmediums der Kolbenstangenseite des Zylinders (56) zuführbar ist, und daß der auf der anderen Seite des Kolbens (53) durch dessen ganzen Querschnitt in dem Zylinderraum (54) erzeugte Druck entsprechend der Wirkflächenverringerung auf der Kolbenstangenseite verringert und jeweils einer zugehörigen ringförmigen Kammer (38a,38b,38c) zuführbar ist.

3. Vorrichtung nach Anspruch 1 oder 2, **dadurch gekennzeichnet**, daß die Druckerzeuger (50) an dem feststehenden Gehäuse (24) des zweiten Drehanschlagkopfes (20) angeordnet sind.

4. Vorrichtung nach einem der Ansprüche 1 bis 3, **dadurch gekennzeichnet**, daß die stufenweise Entlastung der Ringdichtungen (30a,30b,30c,30d) nach beiden Seiten der Ubergangskammer (27) symmetrisch erfolgt.

5. Vorrichtung nach einem der Ansprüche 1 bis 4, **dadurch gekennzeichnet**, daß als Drehantriebseinrichtung ein am oberen Ende des Verbindungsgestänges (5) angeordneter, sich höhenvariabel an der Stützvorrichtung (2) abstützender Kraftdrehkopf dient.

6. Vorrichtung nach einem der Ansprüche 1 bis 5, **dadurch gekennzeichnet**, daß als Drehantriebseinrichtung ein wahlweise mit dem Verbindungsgestänge (5) in Wirkverbindung bringbarer, an sich konstruktiv von Verrohrungsvorrichtungen bekannter Drehantrieb (4') vorgesehen ist.

7. Vorrichtung nach Anspruch 6, **dadurch gekennzeichnet**, daß der Drehantrieb (4') höhenverstellbar an der Stutzvorrichtung (2) angeordnet ist.

8. Vorrichtung nach Anspruch 7, **dadurch gekennzeichnet**, daß der Höhenverstellung längenverstellbare Krafterzeuger dienen.

9. Vorrichtung nach Anspruch 8, **dadurch gekennzeichnet**, daß die langenverstellbaren Krafterzeuger als hydraulisch betätigbare Kolben/Zylindereinheiten ausgebildet sind.

## Claims

1. Device for drilling a bore hole (9)
with a drive structure (3) for mounting above the bore hole (9) to be drilled, with a stationary rotary drive head (4) on it,
with a hollow connecting shaft (5), on which the rotary drive head (4) engages and which is lowered into the bore hole (9) by the rotary drive head,
with a first rotary connecting head (10) mounted fixed in the drive structure (3), by which a flushing medium is fed to the upper end of the connecting shaft, fed through a first feed pipe (12) extending along the connecting shaft (5) to an inlet opening (43) provided on the connecting shaft (5),
with a second rotary connecting head (20) mounted in the drive structure (3), through which there is conducted to the upper end of the connecting shaft (5) a fluid driving medium under high pressure, which is fed through a second feed pipe (22) extending along the connecting shaft to the lower end of the connecting shaft (5), and having a housing (24) surrounding the connecting shaft (5) in a ring-like manner and a transfer chamber (27) in communication with the outer feed pipe (23) for the fluid driving medium and with the upper end of the second feed pipe (22), the transfer chamber being sealed at both ends in an axial direction, and a number of respective axially cascaded hydraulically relieved ring seals (30a, 30b, 30c, 30d) being provided at both ends of the transfer chamber (27),
with a tool head (40) in the form of a flushing head mounted at the lower end of the connecting shaft and communicating with the interior (8) of the connecting shaft,
and with a number of drilling hammers (41) mounted on the tool head, working downwards and driven by the fluid driving medium,
**characterised in that**
respectively at the side of a ring seal (30a, 30b, 30c) facing away from the transfer chamber (27) there is mounted a ring-shaped chamber (38a, 38b, 38c) which has a connection (39a, 39b, 39c) for the supply of a hydraulic pressure medium obtained from a pressure source and which communicates with a side of the ring seals (30b, 30c, 30d) which relieves them,
that the hydraulic relief of the ring seals (30a, 30b, 30c, 30d) takes place in stages and
that pressure reducers (50) acted on by the working medium are provided as pressure sources.

2. Device according to Claim 1, **characterised in that** the pressure reducers (50) comprise cylinders (56), in which the pressure of the driving medium is fed to the piston rod end of the cylinder (56) and that the pressure produced on the other side of the piston (53) by its whole cross-section in the cylinder chamber (54) corresponding to the area reduction on the piston rod end is reduced and respectively fed to an associated ring-shaped chamber (38a, 38b, 38c).

3. Device according to Claim 1 or 2, **characterised in that** the pressure sources (50) are mounted on the fixed housing (24) of the second rotary impact head (20).

4. Device according to one of Claims 1 to 3, **characterised in that** the stepwise relief of the ring seals (30a, 30b, 30c, 30d) takes place symmetrically on both sides of the transfer chamber (27).

5. Device according to one of Claims 1 to 4, **characterised in that** a power rotary head mounted on the upper end of the connecting shaft (5) and supported variably in height on the supporting device (2) serves as the rotary drive device.

6. Device according to one of Claims 1 to 5, **characterised in that** a rotary drive (4'), structurally known in itself from pipe devices, and capable of being brought at will into an operative connection with the connecting shaft (5), is provided as the rotary drive device.

7. Device according to Claim 6, **characterised in that** the rotary drive (4') is mounted to be adjustable in height on the supporting device (2).

8. Device according to Claim 7, **characterised in that** the power sources which are adjustable in length serve for adjustment of the height.

9. Device according to Claim 8, **characterised in that** the power sources of adjustable length are in the form of hydraulically actuated piston/cylinder units.

## Revendications

1. Dispositif de forage d'un trou en terre (9) comprenant :
- au-dessus du trou (9) à forer, une structure d'entraînement (3) équipée d'une tête d'entraînement rotatif (4), montée fixe;
- une tige de liaison (5) creuse, saisie par la tête d'entraînement rotatif (4) et qui peut être descendue par cette tête dans le trou (9),
- montée dans la structure d'entraînement (3), une première tête rotative de raccordement (10) permettant d'amener à la partie supérieure de la tige de liaison (5) un agent de rinçage qui, à travers une première amenée (12) s'étendant le long de la tige de liaison (5) peut parvenir à une ouverture d'entrée (43) prévue sur la tige (5),
- montée dans la structure d'entraînement (3), une seconde tête rotative de raccordement (20) permettant d'amener à l'extrémité supérieure de la tige de liaison (5) un fluide d'entraînement sous haute pression qui, à travers une seconde amenée (22) s'étendant le long de la tige de liaison peut parvenir à l'extrémité inférieure de la tige de liaison (5), cette tête rotative comportant entourant la tige de liaison (5), un boîtier annulaire (24) présentant une chambre de transition (27) étanche en direction axiale des deux côtés et reliée à une conduite externe (23) amenant le fluide d'entraînement et à l'extrémité supérieure de la seconde amenée (22), plusieurs joints annulaires d'étanchéité (30a, 30b, 30c, 30d) empilés en direction axiale et déchargés hydrauliquement étant prévus de chaque côté de la chambre de transition (27),
- montée à l'extrémité inférieure de la tige de liaison, une tête d'outil (40) constituant la tête de rinçage, reliée à l'intérieur (8) de la tige de liaison, et
- montés sur la tête d'outil et travaillant vers le bas, des marteaux foreurs (41) mus par le fluide d'entraînement,
caractérisé en ce que
- sur le côté d'un joint annulaire d'étanchéité (30a, 30b, 30c) situé à l'opposé de la chambre de transition (27) se trouve une chambre annulaire (38a, 38b, 38c) équipée d'une part d'un raccord (39a, 39b, 39c) d'amenée d'un agent hydraulique de pression fourni par un générateur de pression, en liaison d'autre part avec un côté des joints d'étanchéité (30b, 30c, 30d) déchargeant ceux-ci,
- la décharge hydraulique des joints annulaires d'étanchéité (30a, 30b, 30c, 30d) s'effectue de manière étagée, et
- comme générateur de pression, il est prévu des démultiplicateurs de pression (50) actionnés par le fluide d'entraînement.

2. Dispositif selon la revendication 1,
caractérisé en ce que
les démultiplicateurs de pression (50) comprennent des vérins (56) dans lesquels peut être introduite la pression du fluide d'entraînement, du côté de la tige du piston du vérin (56), tandis que sur l'autre côté du piston (53), la pression créée par la pleine section du piston dans la chambre (54) du vérin se trouve réduite en proportion de la réduction de surface active du côté de la tige du piston, cette pression pouvant être introduite dans une chambre annulaire correspondante (38a, 38b, 38c).

3. Dispositif selon la revendication 1 ou 2,
caractérisé en ce que
le générateur de pression (50) est monté sur le boîtier fixe (24) de la seconde tête d'entraînement rotatif (20).

4. Dispositif selon l'une quelconque des revendications 1 à 3,
caractérisé en ce que
la décharge étagée des joints annulaires d'étanchéité (30a, 30b, 30c, 30d) s'effectue symétriquement, en direction des deux côtés de la chambre de transition (27).

5. Dispositif selon l'une quelconque des revendications 1 à 4,
caractérisé en ce que
comme dispositif d'entraînement en rotation, on utilise une tête rotative montée à l'extrémité supérieure de la tige de liaison (5) et s'appuyant à une hauteur variable sur un dispositif de soutien (2).

6. Dispositif selon l'une quelconque des revendications 1 à 5,
caractérisé en ce que
comme dispositif d'entraînement en rotation, il est prévu un entraînement en rotation (4') de dispositifs de tubage continu dont la construction est connue en soi, et pouvant être si besoin amené en liaison active avec la tige de liaison (5).

7. Dispositif selon la revendication 6,
caractérisé en ce que
l'entraînement en rotation (4') peut être réglé en hauteur le long du dispositif de soutien (2).

8. Dispositif selon la revendication 7,
caractérisé en ce que
pour effectuer le réglage en hauteur, on utilise des générateurs de force à longueur réglable.

9. Dispositif selon la revendication 8,
caractérisé en ce que
les générateurs de force à longueur réglable sont constitués par des vérins hydrauliques.
